(19)

Europäisches
Patentamt
European
Patent Office
Office européen
des brevets

(11) **EP 1 772 067 A1**

(12) **EUROPEAN PATENT APPLICATION**

(43) Date of publication:
**11.04.2007 Bulletin 2007/15**

(51) Int Cl.:
*A24C 5/34* *(2006.01)*          *A24C 5/345* *(2006.01)*
*G01N 22/02* *(2006.01)*          *G01N 22/04* *(2006.01)*
*B65B 19/30* *(2006.01)*

(21) Application number: **06121932.5**

(22) Date of filing: **06.10.2006**

(84) Designated Contracting States:
**AT BE BG CH CY CZ DE DK EE ES FI FR GB GR
HU IE IS IT LI LT LU LV MC NL PL PT RO SE SI
SK TR**
Designated Extension States:
**AL BA HR MK YU**

(30) Priority: **07.10.2005 IT BO20050602**

(71) Applicant: **G.D SOCIETÀ PER AZIONI**
**40133 Bologna (IT)**

(72) Inventors:
• **De Pietra, Gaetano**
 **40033 Casalecchio di Reno (IT)**
• **Cerati, Luca**
 **40128 Bologna (IT)**

(74) Representative: **Jorio, Paolo et al**
**Studio Torta S.r.l.**
**Via Viotti, 9**
**10121 Torino (IT)**

(54) **Packing machine and method and device for controlling cigarette tips**

(57)    A method and device (1) for controlling tips (3)
of cigarettes (4) fed in groups (7) along a feed path (P)
through a control station (8); the device (1) has a number
of sensors (13), each of which induces a stationary mi-
crowave field (14) to determine correct fill of the tips (3)
of cigarettes (4) travelling through the stationary micro-
wave field (14).

Fig.1

EP 1 772 067 A1

# Description

The present invention relates to a packing machine and to a method and device for controlling cigarette tips.

On cigarette packing machines, the tips of cigarettes in a group are analyzed to ensure they are filled.

More specifically, this is done by light scattering analysis of the cigarette tips. Devices employing this type of analysis comprise a source for emitting a light beam substantially parallel to the axis of a cigarette for analysis; and sensors positioned crosswise to the cigarette to detect scattered light. As described in Patent US 4907607, to perform this type of analysis correctly on groups of cigarettes, the individual cigarettes must be offset with respect to the groups, so that the sensors are positioned correctly about the cigarettes. This complicates the packing machine (devices must be provided to offset and reposition the cigarettes) and increases the risk of damaging the cigarettes.

To check filling of cigarette tips, back scattering analysis has also been proposed, and which comprises directing a light beam, parallel to the cigarette axis, onto the tip of the cigarette, and determining the light scattered in the direction of the beam. Back scattering has the disadvantage that, in the event the cigarette tip is filled on the surface but with a void at the back, the light is still detected and the cigarette tip therefore considered properly filled.

Another important point to note is that both scattering and back scattering analysis also have the drawback of the detected data depending on the colour of the tobacco. Which means a change in tobacco colour involves recalibrating the sensors, thus increasing running cost and downtime.

It is an object of the present invention to provide a packing machine and a method and device for controlling the fill of cigarette tips, designed to eliminate the aforementioned drawbacks, and which, in particular, are cheap and easy to implement.

According to the present invention, there is provided a device for controlling the fill of cigarette tips, as claimed in Claim 1 or in any one of the following Claims depending directly or indirectly on Claim 1.

According to the present invention, there is provided a method of controlling the fill of cigarette tips, as claimed in Claim 15 or in any one of the following Claims depending directly or indirectly on Claim 15.

According to the present invention, there is provided a packing machine as claimed in Claim 29 or in any one of the following Claims depending directly or indirectly on Claim 29.

A number of non-limiting embodiments of the present invention will be described by way of example with reference to the accompanying drawings, in which:

Figure 1 shows a schematic front view of a cigarette packing machine in accordance with the present invention;

Figure 2 shows a larger-scale detail of the Figure 1 machine;

Figure 3 shows a section of a larger-scale detail of the Figure 2 detail;

Figure 4 shows a graph of test data acquired in accordance with the present invention; the x axis shows frequency in GHz, and the y axis the power measurement;

Figure 5 shows a graph of test data acquired in accordance with the present invention; the x axis shows frequency deviations in GHz, and the y axis power measurement deviations;

Figure 6 shows a further embodiment of the Figure 3 detail;

Figure 7 shows a cross section of the Figure 6 detail;

Figure 8 shows a section of a further embodiment of the Figure 3 detail;

Figure 9 shows straight lines obtained by linear interpolation of test data obtained measuring tobacco of known density and humidity; the x axis shows the $A_\Delta/A_i$ ratio, and the y axis density.

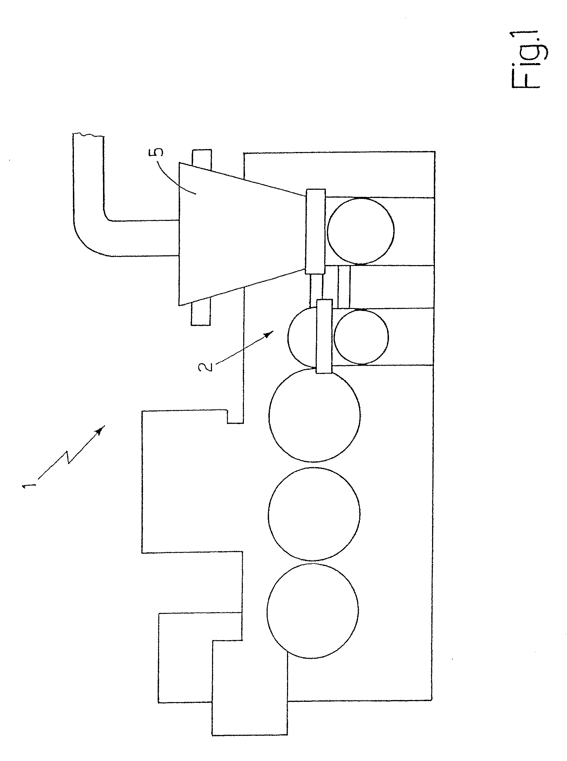

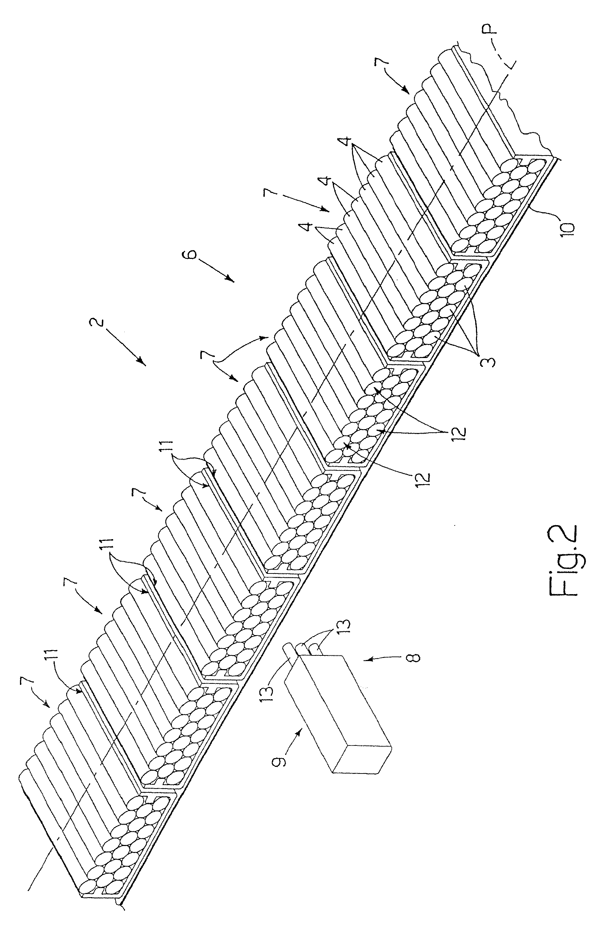

Number 1 in Figure 1 indicates as a whole a packing machine for producing packets of cigarettes. Packing machine 1 comprises a device 2 (Figure 2) for controlling the fill of tips 3 of cigarettes 4. Device 2 is located downstream from a hopper 5 (shown schematically in Figure 1) for cigarettes 4, and upstream from a reject unit (not shown), and in turn comprises a conveyor 6 for feeding groups 7 of cigarettes 4, crosswise to cigarettes 4, along a feed path P through a control station 8 equipped with a control unit 9.

Conveyor 6 comprises a belt 10; and a number of seats 11, each for housing a respective group 7 of cigarettes 4 comprising three superimposed rows 12 of cigarettes 4.

Control unit 9 comprises a number of - in particular, three - microwave sensors 13 arranged one on top of another, so that, as group 7 of cigarettes 4 travels through control station 8, each sensor 13 detects the density of the tips of cigarettes 4 in a respective row 12.

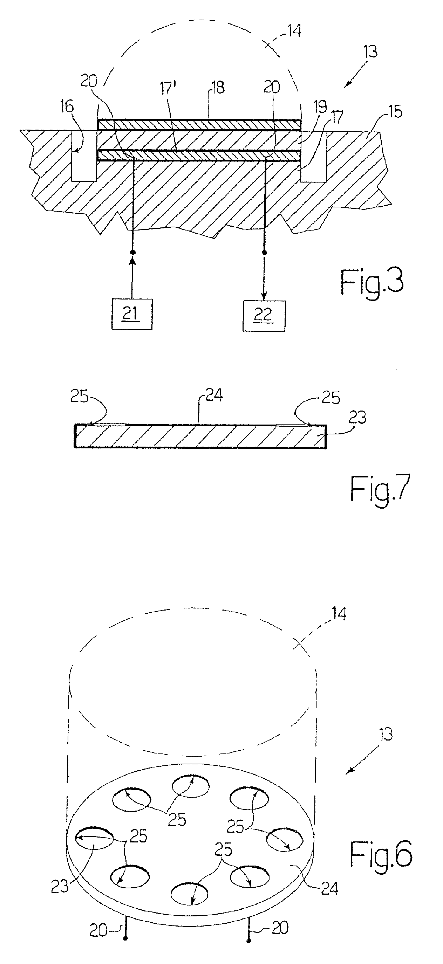

In the Figure 3 embodiment, each sensor 13 produces a respective stationary microwave field 14 of given shape, and emits a number of acquisition signals, each depending on the density of a respective tip 3 of cigarette 4 travelling through microwave field 14. More specifically, microwave field 14 is substantially hemispherical.

Each sensor 13 comprises a body 15 made of conducting material (e.g. aluminium) and having a substantially circular groove 16 defining a flat member 17 coated externally with two layers 17' and 18 of dielectric material (e.g. alumina or plastic), and a further layer 19 of conducting material. Layer 17' directly contacts flat member 17, and is located on the opposite side of layer 19 to layer 18. Flat member 17 is typically about 8 mm in diameter.

Each sensor 13 also comprises two electrodes 20 for connecting layer 17' of dielectric material to a generator 21 and to a detector (not shown) of a computer 22 respectively.

In actual use, as a group 7 of cigarettes 4 travels through control station 8, each sensor 13 emits a detection signal for each cigarette 4 whose tip 3 travels through the respective microwave field 14. At this point, computer 22 compares the detection signal with a reference data item. More specifically, computer 22 determines a detection data item as a function of the detection signal, and compares the detection data item with the reference data item. If the difference between the detection signal and the reference data item exceeds a given threshold value, an error signal indicating a faulty cigarette 4 is emitted. In which case, the reject unit (not shown) downstream from device 1 and connected to computer 22 eliminates the faulty cigarette 4 or (in other embodiments) the group 7 containing the faulty cigarette 4.

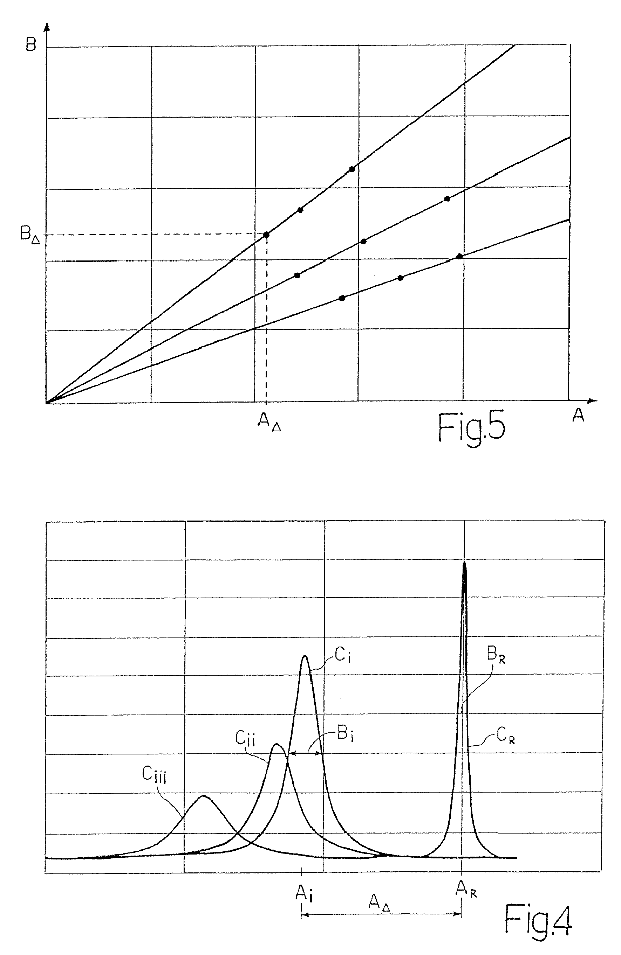

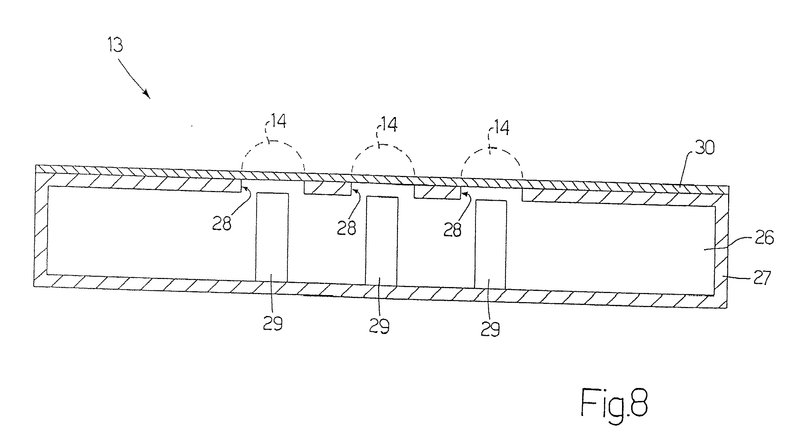

Operation of sensor 13 and computer 22 will now be explained in more detail with particular reference to Figures 4 and 5. For each measurement, sensor 13 performs a sweep to vary the microwave frequency in microwave field 14 between 1 GHz and 300 GHz. Microwave frequency is preferably varied between 2 and 3 GHz to avoid heating the tobacco in cigarettes 4 travelling through control station 8 and/or any biological tissue in microwave field 14.

Figure 4 - in which the y axis shows microwave frequency, and the x axis the power measurement - shows a reference curve $C_R$ relative to a reference signal obtained with substantially no objects in microwave field 14. Reference curve $C_R$ has a peak at a given reference frequency $A_R$, and a reference amplitude $B_R$ at mid peak height.

Figure 4 also shows response curves $C_i$, $C_{ii}$, $C_{iii}$ of relative detection signals. Each response curve has a relative peak detected frequency $A_i$, and a relative detected amplitude $B_i$ at mid peak height; which peak detected frequency $A_i$ and detected amplitude $B_i$ depend on the humidity and density of a tip 3 of analyzed cigarette 4.

In actual use, to determine the fill of tip 3 of cigarette 4, computer 22 receives the detection signal, and determines peak detected frequency $A_i$ and detected amplitude $B_i$, which are then processed to permit a comparison between the detection signal and the reference data item.

Computer 22 preferably determines a first deviation $A_\Delta$ between peak detected frequency $A_i$ and reference frequency $A_R$, and a second deviation $B_\Delta$ between detected amplitude $B_i$ and reference amplitude $B_R$. At this point, a detected humidity of tip 3 of cigarette 4 is determined, in particular by means of the following equation:

$$\varphi = arctg\,\frac{A_\Delta}{B_\Delta}$$

where $\varphi$ is directly proportional to detected humidity. In this connection, it should be pointed out that, in a test graph showing first deviation $A_\Delta$ along the x axis, and second deviation $B_\Delta$ along the y axis (as in Figure 5), the points relative to detection signals of tips 3 of different cigarettes 4 of substantially the same humidity substantially lie on the same straight lines.

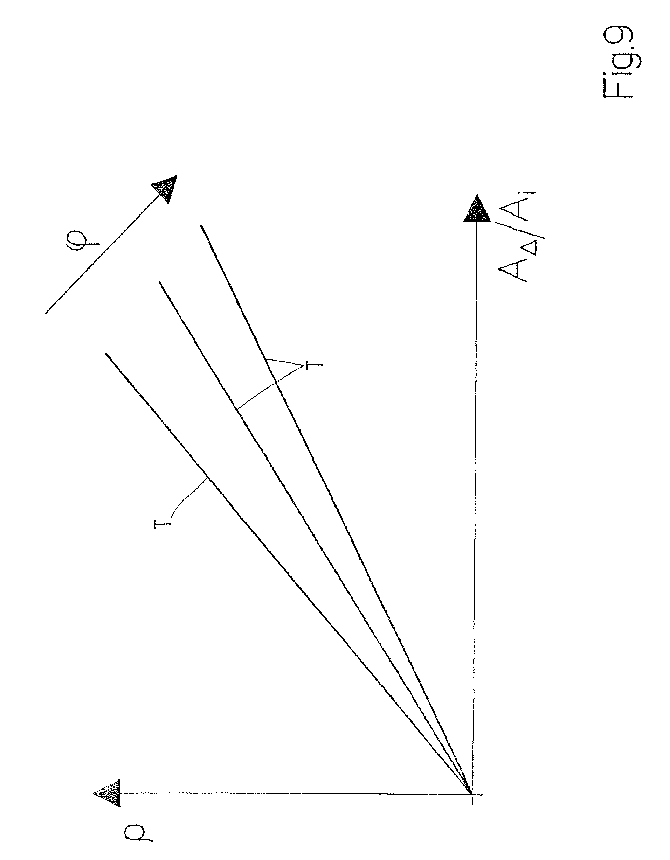

Given the detected humidity, computer 22 determines a detected density of tip 3 of cigarette 4 as a function of detected humidity and of first deviation $A_\Delta$ or second deviation $B_\Delta$. More specifically, density is calculated using curves (in particular, straight lines) T determined beforehand experimentally (and shown in Figure 9). Each curve T defines density (indicated $\rho$ in Figure 9) as a function of ratio $A_\Delta/A_i$ at a given constant humidity (i.e. a given constant $\varphi$).

At this point, the detected density (i.e. the detected data item) is compared with a reference density (i.e. the reference data item); and, if the difference between the detected density and the reference density exceeds the threshold value, the error signal is emitted.

In a further embodiment shown in Figures 6 and 7, sensor 13 comprises a flat circular body 23 of dielectric material (e.g. alumina) coated with a layer 24 of conducting material (e.g. copper) having a number of circular holes 25. In this case, microwave field 14 is substantially cylindrical.

In a further embodiment shown in Figure 8, sensor 13 comprises a body 26 of dielectric material (e.g. alumina) coated with a layer 27 of conducting material (e.g. copper) having three circular holes 28, and three substantially parallelepiped-shaped members 29 of conducting material; and holes 28 are covered with a layer of insulating material 30. In this case, sensor 13 defines three microwave fields 14, and therefore controls the mean density of three tips 3 of cigarettes 4 simultaneously.

Device 1 has the following advantages:

- cigarettes 4 need not be offset with respect to one another;
- detection signals, and therefore density measurements, independent of tobacco colour are obtained;
- detection signals, and therefore density measurements, sensitive to below-surface tobacco voids are obtained.

**Claims**

1. A device for controlling the fill of cigarette tips, comprising conveying means (6) for feeding a group (7) of cigarettes (4) along a feed path (P) through a control station (8); at least one sensor (13) located at the control station (8), and which emits a detection signal as a function of the fill of a tip (3) of a cigarette (4); and a computer (22) connected to the sensor (13), and which compares the detection signal with a reference data item, and emits an error signal as a function of the comparison between the reference data item and the detection signal; the device being **characterized in that** the sensor (13) comprises a microwave sensor (13) for producing a microwave field (14) of a substantially given shape, and through which the tip (3) of the cigarette (4) travels in use; the detection signal being a function of the density of the tip (3) of the cigarette (4).

2. A device as claimed in Claim 1, wherein the computer (22) determines a detection data item as a function of the detection signal, and emits the error signal when the difference between the detection data item and the reference data item exceeds a threshold value.

3. A device as claimed in Claim 1 or 2, wherein the microwave sensor (13) defines a planar microwave field (14).

4. A device as claimed in any one of Claims 1 to 3, wherein the conveying means (6) convey the groups (7) of cigarettes (4) crosswise to the cigarettes (4).

5. A device as claimed in any one of Claims 1 to 4, wherein the sensor (13) emits a respective detection signal for each cigarette (4) whose tip (3) travels through the microwave field (14).

6. A device as claimed in any one of Claims 1 to 5, and comprising at least three sensors (13), each for controlling tips (3) of cigarettes (4) in a respective row (12) of cigarettes (4) in each group (7) of cigarettes (4); each group (7) of cigarettes (4) comprising three superimposed rows (12) of cigarettes (4).

7. A device as claimed in any one of Claims 1 to 6, wherein the detection signal comprises a response curve ($C_i$, $C_{ii}$, $C_{iii}$) having a peak detected frequency ($A_i$), and a detected amplitude ($B_i$) at mid peak height; the peak detected frequency ($A_i$) and the detected amplitude ($B_i$) being functions of the density and humidity of the tip (3) of the cigarette (4); and the computer (22) comparing the detection signal with the reference data item by processing the peak detected frequency ($A_i$) and the detected amplitude ($B_i$).

8. A device as claimed in Claim 7, wherein the computer (22) determines a detected density of the tip (3) of the cigarette (4) as a function of the peak detected frequency ($A_i$) and the detected amplitude ($B_i$).

9. A device as claimed in Claim 8, wherein the computer (22) determines a detected humidity of the tip (3) of the cigarette (4) as a function of the peak detected frequency ($A_i$) and the detected amplitude ($B_i$), and determines the detected density as a function of the detected humidity and the peak detected frequency ($A_i$) or the detected amplitude ($B_i$).

10. A device as claimed in any one of Claims 7 to 9, wherein the computer (22) determines a first deviation ($A_\Delta$) between the peak detected frequency ($A_i$) and a reference frequency ($A_R$), determines a second deviation ($B_\Delta$) between the detected amplitude ($B_i$) and a reference amplitude ($B_R$), and determines a detected humidity of the tip (3) of the cigarette (4) as a function of the first and second deviation ($A_\Delta$, $B_\Delta$); the reference frequency ($A_R$) and the reference amplitude ($B_R$) being the peak frequency and mid-peak-height amplitude respectively of a reference curve ($C_R$) of a reference signal obtained with substantially no objects in the microwave field (14).

11. A device as claimed in Claim 10, wherein the computer (22) determines a detected humidity of the tip (3) of the cigarette (4) as a function of the first and second deviation ($A_\Delta$, $B_\Delta$), and determines the detected density as a function of the detected humidity and the first or second deviation ($A_\Delta$, $B_\Delta$).

12. A device as claimed in Claim 11, wherein the computer (22) determines the detected humidity of the tip (3) of the cigarette (4) according to the following equation:

$$\varphi = arctg \frac{A_\Delta}{B_\Delta}$$

where $\varphi$ is directly proportional to the detected humidity, $A_\Delta$ indicates the modulus of the first deviation, and $B_\Delta$ indicates the modulus of the second deviation.

13. A device as claimed in Claim 12, wherein the computer (22) determines the detected density of the tip (3) of the cigarette (4) using test curves (T), each of which is predetermined experimentally at a respective given constant humidity; and each curve (T) describes the density pattern as a function of the ratio $A_\Delta/A_i$.

14. A device as claimed in any one of Claims 1 to 6, wherein the computer (22) breaks the detection signal down into two components ($A_i$, $B_i$), each of which is a function of the humidity and density of the tip (3) of the cigarette (4); determines the detected humidity as a function of the two components ($A_i$, $B_i$); and

determines the detected density as a function of the detected humidity and at least one of the two components ($A_i$, $B_i$).

15. A method of controlling the fill of cigarette tips, the method comprising conveying a group (7) of cigarettes (4) along a feed path (P) through a control station (8); determining a detection signal as a function of the fill of a single tip (3) of a cigarette (4); and comparing the detection signal with a reference data item, and emitting an error signal as a function of the comparison between the detection signal and the reference data item; the method being **characterized in that** the detection signal is determined by producing a microwave field (14) of substantially given shape, through which microwave field (14) the tip (3) of the cigarette (4) travels; the detection signal being a function of the density of the tip (3) of the cigarette (4).

16. A method as claimed in Claim 15, wherein an error signal is emitted when the difference between a detection data item, determined as a function of the detection signal, and the reference data item exceeds a threshold value.

17. A method as claimed in Claim 15 or 16, wherein the microwave field (14) is a planar microwave field (14).

18. A method as claimed in any one of Claims 15 to 17, wherein the cigarettes (4) are conveyed transversely through the control station (8).

19. A method as claimed in any one of Claims 15 to 18, wherein the detection signal comprises a response curve ($C_i$, $C_{ii}$, $C_{iii}$) having a peak detected frequency ($A_i$), and a detected amplitude ($B_i$) at mid peak height; the peak detected frequency ($A_i$) and the detected amplitude ($B_i$) being functions of the density and humidity of the tip (3) of the cigarette (4); and the detection signal being compared with the reference data item by processing the peak detected frequency ($A_i$) and the detected amplitude ($B_i$).

20. A method as claimed in Claim 19, wherein a detected density of the tip (3) of the cigarette (4) is determined as a function of the peak detected frequency ($A_i$) and the detected amplitude ($B_i$).

21. A method as claimed in Claim 20, wherein a detected humidity of the tip (3) of the cigarette (4) is determined as a function of the peak detected frequency ($A_i$) and the detected amplitude ($B_i$); the detected density being determined as a function of the detected humidity and the peak detected frequency ($A_i$) or the detected amplitude ($B_i$).

22. A method as claimed in Claim 20 or 21, wherein a first deviation ($A_\Delta$) between the peak detected frequency ($A_i$) and a reference frequency ($A_R$) is determined; a second deviation ($B_\Delta$) between the detected amplitude ($B_i$) and a reference amplitude ($B_R$) is determined; and the detected density of the tip (3) of the cigarette (4) is determined as a function of the first and second deviation ($A_\Delta$, $B_\Delta$); the reference frequency ($A_R$) and the reference amplitude ($B_R$) being the peak frequency and mid-peak-height amplitude respectively of a reference curve ($C_R$) of a reference signal obtained with substantially no objects in the microwave field (14).

23. A method as claimed in Claim 22, wherein the detected humidity of the tip (3) of the cigarette (4) is determined as a function of the first and second deviation ($A_\Delta$, $B_\Delta$), and the detected density is determined as a function of the detected humidity and the first or second deviation ($A_\Delta$, $B_\Delta$).

24. A method as claimed in Claim 23, wherein the detected humidity of the tip (3) of the cigarette (4) is determined according to the following equation:

$$\varphi = arctg\frac{\tilde{A}_\Delta}{B_\Delta}$$

where $\varphi$ is directly proportional to the detected humidity, $A_\Delta$ indicates the modulus of the first deviation, and $B_\Delta$ indicates the modulus of the second deviation.

25. A method as claimed in Claim 23 or 24, wherein the detected density of the tip (3) of the cigarette (4) is determined using test curves (T), each of which is predetermined experimentally at a respective given constant humidity; and each curve (T) describes the density pattern as a function of the ratio $A_\Delta/A_i$.

26. A method as claimed in any one of Claims 20 to 25, wherein the detected density is compared with the reference data item.

27. A method as claimed in Claim 26, wherein an error signal is emitted when the difference between the detected density and the reference data item exceeds a threshold value.

28. A method as claimed in any one of Claims 15 to 18, wherein the detection signal is broken down into two components ($A_i$, $B_i$), each of which is a function of the humidity and density of the tip (3) of the cigarette (4); the detected humidity is determined as a function of the two components ($A_i$, $B_i$); and the detected density is determined as a function of the detected humidity and at least one of the two components ($A_i$, $B_i$).

**29.** A packing machine comprising a device (1) for controlling the fill of tips (3) of cigarettes (4), as claimed in one of Claims 1 to 14.

Fig.1

EP 1 772 067 A1

Fig.2

EP 1 772 067 A1

Fig.3

Fig.7

Fig.6

Fig.5

Fig.4

Fig.8

EP 1 772 067 A1

Fig.9

European Patent
Office

**EUROPEAN SEARCH REPORT**

Application Number

EP 06 12 1932

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| P,X | DE 20 2005 010375 U1 (TEWS ELEKTRONIK DIPL ING MANFR [DE]) 20 October 2005 (2005-10-20) * the whole document * | 1-29 | INV. A24C5/34 A24C5/345 G01N22/02 G01N22/04 B65B19/30 |
| X | EP 0 370 231 A1 (SASIB SPA [IT]) 30 May 1990 (1990-05-30) | 1-5, 15-18, 26,27,29 | |
| Y | * column 5, line 42 - line 52; claims 1-13; figures 1-4 * | 7-14, 19-25,28 | |
| Y | EP 0 889 321 A (TEWS ELEKTRONIK [DE]) 7 January 1999 (1999-01-07) * the whole document * | 7-14, 19-25,28 | |
| A | US 2004/124853 A1 (MOLLER HENNING [DE] ET AL MOELLER HENNING [DE] ET AL) 1 July 2004 (2004-07-01) * the whole document * | 1,15,29 | |

| | | | TECHNICAL FIELDS SEARCHED (IPC) |
|---|---|---|---|
| | | | A24C G01N B65B |

The present search report has been drawn up for all claims

| Place of search | Date of completion of the search | Examiner |
|---|---|---|
| Munich | 12 January 2007 | Grondin, David |

CATEGORY OF CITED DOCUMENTS

X : particularly relevant if taken alone
Y : particularly relevant if combined with another
     document of the same category
A : technological background
O : non-written disclosure
P : intermediate document

T : theory or principle underlying the invention
E : earlier patent document, but published on, or
     after the filing date
D : document cited in the application
L : document cited for other reasons

& : member of the same patent family, corresponding
     document

EPO FORM 1503 03.82 (P04C01)

# EP 1 772 067 A1

## ANNEX TO THE EUROPEAN SEARCH REPORT
## ON EUROPEAN PATENT APPLICATION NO.

EP 06 12 1932

This annex lists the patent family members relating to the patent documents cited in the above-mentioned European search report.
The members are as contained in the European Patent Office EDP file on
The European Patent Office is in no way liable for these particulars which are merely given for the purpose of information.

12-01-2007

| Patent document cited in search report | | Publication date | Patent family member(s) | | Publication date |
|---|---|---|---|---|---|
| DE 202005010375 U1 | | 20-10-2005 | EP | 1739411 A1 | 03-01-2007 |
| | | | US | 2007000503 A1 | 04-01-2007 |
| EP 0370231 | A1 | 30-05-1990 | DE | 68921425 D1 | 06-04-1995 |
| | | | DE | 68921425 T2 | 14-09-1995 |
| | | | IT | 1225366 B | 13-11-1990 |
| EP 0889321 | A | 07-01-1999 | DE | 29711571 U1 | 05-11-1998 |
| | | | JP | 3515375 B2 | 05-04-2004 |
| | | | JP | 11125607 A | 11-05-1999 |
| | | | JP | 2001066264 A | 16-03-2001 |
| | | | US | 5977780 A | 02-11-1999 |
| US 2004124853 | A1 | 01-07-2004 | NONE | | |

EPO FORM P0459

For more details about this annex : see Official Journal of the European Patent Office, No. 12/82

14

**EP 1 772 067 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4907607 A